# EUROPEAN PATENT SPECIFICATION

(11) **EP 3 428 782 B1**
(45) Date of publication and mention of the grant of the patent: **29.09.2021**
(21) Application number: 18182390.7
(22) Date of filing: 09.07.2018
(51) Int. Cl.: G06F 3/03, G06F 3/0488, G06F 21/31, G06F 21/64

(54) **METHOD AND DEVICE FOR PRODUCING AN ELECTRONIC SIGNED DOCUMENT**
VERFAHREN UND VORRICHTUNG ZUR HERSTELLUNG EINES ELEKTRONISCHEN UNTERSCHRIEBENEN DOKUMENTS
PROCÉDÉ ET DISPOSITIF DE PRODUCTION D'UN DOCUMENT SIGNÉ ÉLECTRONIQUEMENT

(30) Priority: 10.07.2017 TW 106123070
(43) Date of publication of application: 16.01.2019
(73) Proprietor: ThinkCloud Technology Co., Ltd., Taichung City 407609 (TW)
(72) Inventor: WU, Yu-Jen, 408 Taichung City (TW)
(74) Representative: Regimbeau

(56) References cited:
- EP-A1- 3 054 379
- US-A1- 2002 136 407
- US-A1- 2014 129 255
- US-A1- 2014 351 133
- US-A1- 2015 012 812
- US-A1- 2015 026 478
- US-A1- 2016 224 528

## Description

The disclosure relates to a method and a device for generating an electronic signed document.

U.S. Patent No. 9798706 discloses a method for generating an electronic signature. In the method, an electronic device receives a handwritten signature inputted by a signer and a dynamic image that presents a motion of the signer during signing the handwritten signature. Afterward, a web server compiles a data file that includes a representative signal of the handwritten signature and a streaming file of the dynamic image, and executes the data file in the webpage as an electronic signature.

Document US 2014/129255 describes technologies for medical information and scheduling communication including verifying the identity of a patient and determining a personal health record (PHR) controlled by the patient. Furthermore, the method includes, upon request of the patient, authorizing selective access to the PHR by an entity and selectively pushing information from the PHR to the entity, performing a real-time medical information activity associated with the PHR and the entity, and adding the activity to the PHR.

Document US 2014/351133 describes methods and systems for validating transactions in an automated, secure, regulatory-compliant manner, in which a second party is presented with a graphic user interface that displays a multimedia presentation prepared by or on behalf of a first party, which provide the second party with an explanation of each document to be executed. The system includes a device for capturing the buyer's digital signature, and a recording device for capturing the actions and responses of the second party before the second party authorizes that the digital signature be associated with each document.
Document US 2016/224528 describes systems and methods for the sharing, collaborative reviewing and freestyle multiparty signing of an electronic document. The system and method to stream an electronic document from a CSR system onto a touchscreen device for real time and multiple signature placement anywhere within an electronic document.

One object of the disclosure is to provide a method for generating an electronic signed document.

According to one embodiment of the disclosure, a method for generating an electronic signed document as defined in claim 1 is provided.

Another object of the disclosure is to provide an electronic device that is capable of executing the above-mentioned method.

According to one embodiment of the disclosure, an electronic device as defined in claim 8 is provided.

Other features and advantages of the disclosure will become apparent in the following detailed description of the embodiments with reference to the accompanying drawings, of which:
Figure 1 is a block diagram illustrating an electronic device according to one embodiment of the disclosure;
Figure 2 is a schematic view illustrating implementations of the electronic device;
Figure 3 illustrates the electronic device displaying an original electronic document;
Figure 4 illustrates a pop-up window displayed by the electronic device;
Figure 5 illustrates the electronic device generating an electronic signed document;
Figure 6 illustrates the electronic device displaying an electronic signed document; and
Figure 7 is a flow chart illustrating steps for generating an electronic signed document according to
one embodiment of the disclosure.

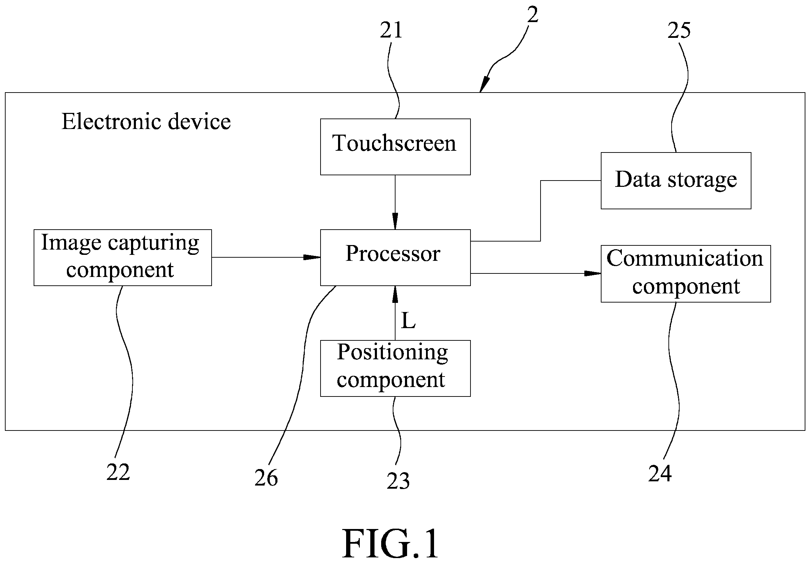

Figure 1 is a block diagram illustrating an electronic device 2 according to one embodiment of the disclosure.

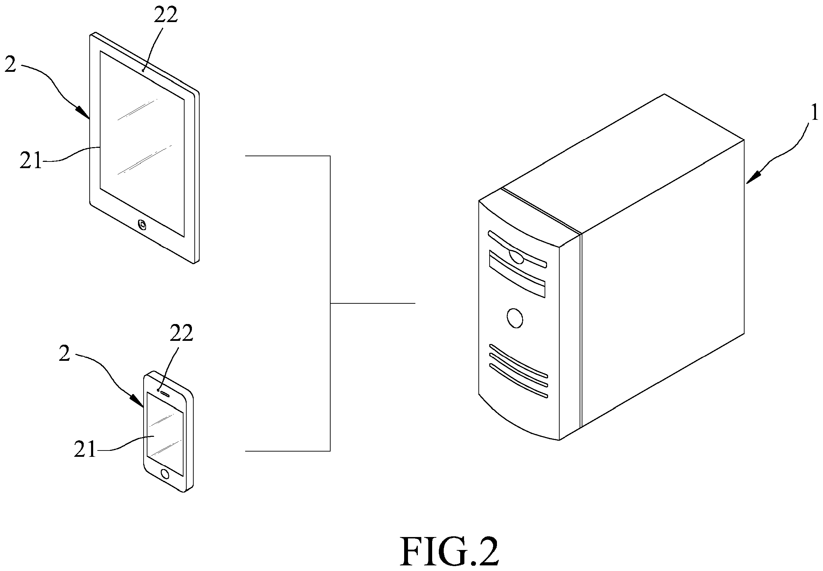

As shown in Figure 2, the electronic device 2 may be embodied using a personal computer, a laptop, a tablet, a mobile device (e.g., a smartphone), a personal digital assistant (PDA), etc., and includes an input/output module, an image capturing component 22, a positioning component 23, a communication component 24, a data storage 25 and a processor 26.

The input/output module may include an output device such as a display component (e.g., a touchscreen), and an input device such as a writing pad, etc. In this embodiment, the input and output devices are integrated as a touchscreen 21. The image capturing component 22 may be embodied using a physical built-in camera that is built in the electronic device 2 or an external camera connected to the electronic device 2. The positioning component 23 may be embodied using a global positioning system (GPS) component for obtaining a set of location coordinates (L) that indicates a geolocation of the electronic device 2.

The communication component 24 may include a short-range wireless communicating module supporting a short-range wireless communication network using a wireless technology of Bluetooth® and/or Wi-Fi, etc., and a mobile communicating module supporting telecommunication using Long-Term Evolution (LTE), the third generation (3G) and/or fourth generation (4G) of wireless mobile telecommunications technology, and/or the like.

The data storage 25 may be embodied using a non-volatile storage medium such as a hard disk, a flash memory, etc. The data storage 25 stores an operating system (OS) of the electronic device 2 and a software application that can be executed by the processor 26, and at least one original electronic document.

The processor 26 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

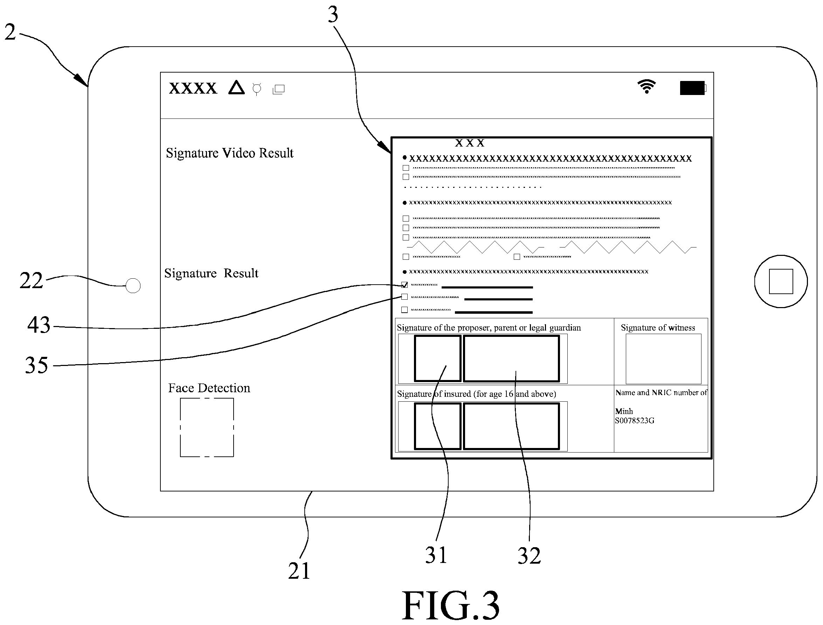

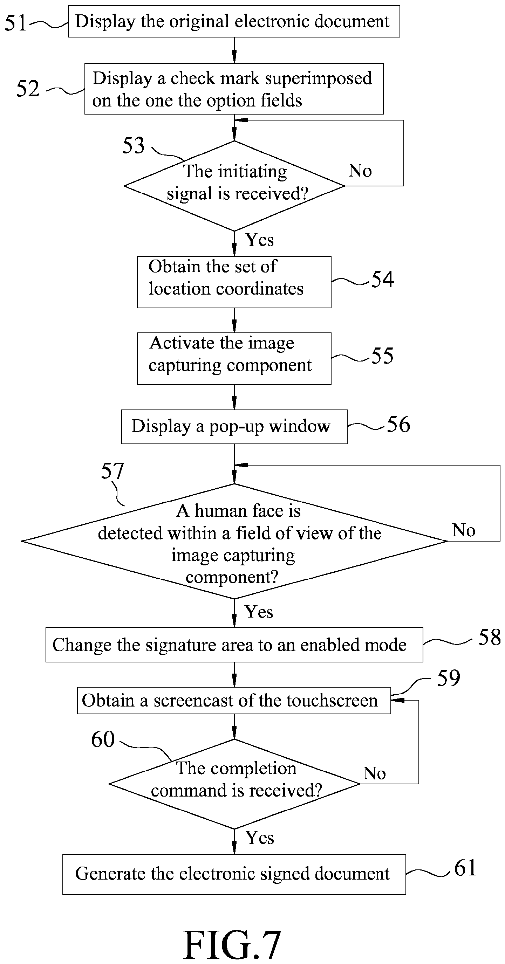

Figure 7 is a flow chart illustrating steps of a method for generating an electronic signed document from the original electronic document. In this embodiment, as shown in Figure 3, the electronic device 2 is embodied using a tablet, the input/output module is embodied using the touchscreen 21, and when it is desired for a user to "sign" the original electronic document, the user may operate the electronic device 2 to execute the software application. In response, the processor 26 controls the touchscreen 21 to display the original electronic document in step 51.

In the embodiment of Figure 3, the original electronic document 3 displayed by the touchscreen 21 includes a signature field 31 and a video field 32. In a case that the original electronic document 3 needs multiple signatures from different parties, additional signature fields and video fields may be present, such as the case depicted in Figure 3.

In some examples, the original electronic document 3 may further include one or more option fields 35. In this example, the option fields 35 are in the form of check boxes.

Each of the option fields 35 may be associated with a statement (e.g., an agreement by the user, an acknowledgment, etc.).

Before signing the original electronic document 3, the user may operate the electronic device 2 to interact with one the option fields 35 (e.g., to directly touch the touchscreen at a position corresponding to one of the check boxes) in step 52. In response to a user-input signal associated with the one of the option fields 35, the processor 26 may control the touchscreen 21 to display a check mark 43 superimposed on the one the option fields 35. In particular, the user-input signal is generated by the one of the option fields 35 in response to the interaction by the user.

Afterward, when the user is ready to sign the original electronic document 3, the user may operate the electronic device 2 to input an initiating command associated with the signature field 31 (e.g., by directly touching the touchscreen at a position corresponding to the signature field 31).

The processor 26 determines, in step 53, whether the initiating signal is received. In response to the receipt of the initiating signal, in step 54, the processor 26 obtains the set of location coordinates (L) from the positioning component 23. Otherwise, the processor 26 stands by until the initiating signal is received.

In step 55, the processor 26 controls the image capturing component 22 to activate, so as to start obtaining images.

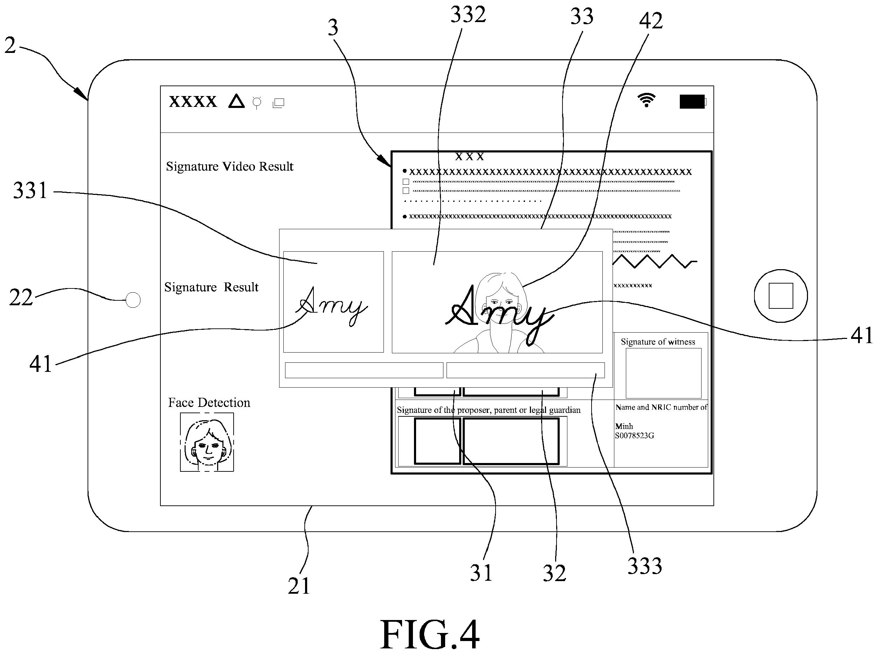

In step 56, the processor 26 controls the touchscreen 21 to display a pop-up window 33 (see Figure 4) that superimposes a part of the original electronic document 3. As shown in Figure 4, the pop-up window 33 includes a signature area 331 and a video area 332. It is noted that initially, when the pop-up window 33 is displayed, the signature area 331 is in a disabled mode, that is, the user is not yet able to input the signature in the signature area 331. The video area 332 is programmed to display what is currently being captured by the capturing component 22.

In step 57, the processor 26 determines whether a human face is detected within a field of view of the image capturing component 22. This may be done by the processor 26 performing analysis on the images captured by the image capturing component 22.

When it is determined that a human face is detected within the field of view of the image capturing component 22, the processor 26 deduces that the user (i.e., a signer) is in front of the electronic device 2. In turn, in step 58, the processor 26 changes the signature area 331 to an enabled mode. That is to say, the user is now allowed to input the signature in the signature area 331.

In implementation, the user inputs a set of signature strokes 41, one stroke at a time, to compose a signature in the signature area 331 using a finger or a stylus pen. For each stroke of the set of signature strokes 41, the processor 26 receives a representative signal from the touchscreen 21. The representative signal is embedded with a markup language. For the signature that includes a plurality of signature strokes, the processor 26 receives a plurality of the representative signals respectively representing the plurality of signature strokes, and each of the representative signals is embedded with a respective markup language. In this embodiment, the markup language may be selected from Javascript, Java, Swift, Objecting C, etc.

Additionally, as the user inputs the set of signature strokes that constitute a signature in the signature area 331, the processor 26 controls the image capturing component 22 to start recording the images captured as a real-time video 42. In this embodiment, the real-time video 42 may be in the form of a streaming media in a format selected from the following: H.263, H.264, flash video (.f4v), Realmedia (.rm), Windows Media Video (.wmv), .m4v, Quicktime File Format (.mov), etc. In this embodiment, as it is being recorded, the real-time video 42 is displayed in the video area 332.

As the set of signature strokes 41 is being inputted, the inputted stroke(s) is displayed in the signature area 331. In some embodiments, the set of signature strokes 41 is further displayed in the video area 332, superimposing the real-time video 42 (see Figure 4).

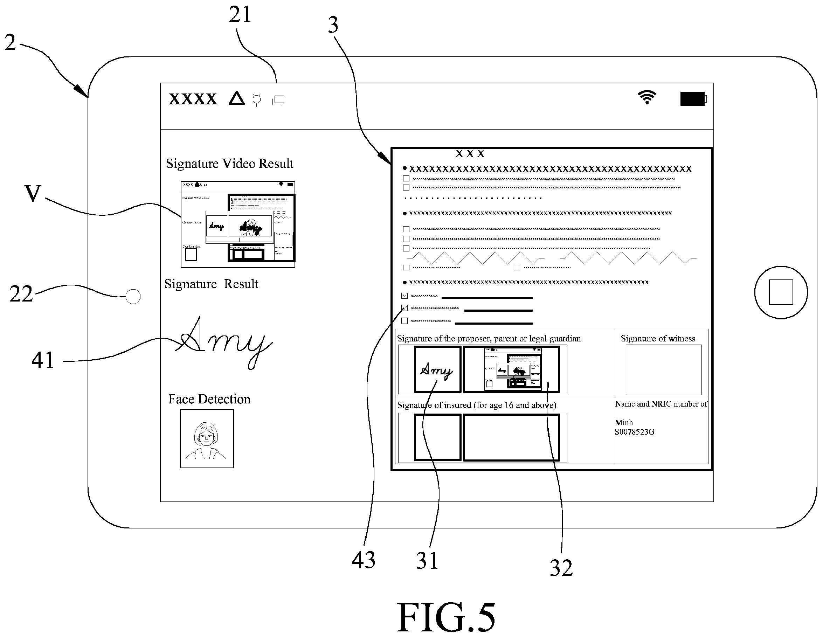

In step 59, when it is determined that the user has started inputting the set of signature strokes 41, the processor 26 starts obtaining a screencast (V) (see Figure 5) of the touchscreen 21. The screencast (V) records the information that is visible on the touchscreen 21, including the original electronic document 3, the real-time video 42, the set of signature strokes 41, and the pop-up window 33.

After the user has finished inputting the set of signature strokes 41, he/she may operate the electronic device 2 to input a completion command (e.g., by directly touching the touchscreen at a position corresponding to a complete button 333).

When the processor 26 determines in step 60 that the completion command is received, the flow proceeds to step 61, in which the processor 26 generates the electronic signed document. Otherwise, the flow goes back to step 59.

In step 61, as shown in Figure 5, the processor 26 generates the electronic signed document by embedding the set of signature strokes 41 and the screencast (V) in the original electronic document 3. Specifically, the set of signature strokes 41 is embedded in the signature field 31, and the screencast (V) is embedded in the video field 32.

In some embodiments, in this step, the processor 26 further embeds the set of location coordinates (L) in the original electronic document 3 so as to generate the electronic signed document.

In some embodiments, in this step, the processor 26 further generates an encryption value based on at least content of the screencast (V), and further embeds the encryption value in the original electronic document 3 so as to generate the electronic signed document.

For example, the encryption value may be in the form of a hash value that is generated based on one or more of the following parameters: a geolocation of the electronic device 2; a position of one or more checked marks 43 superimposed on the original electronic document 3; a position of the screencast (V) on the touchscreen 21 (i.e., the position of the video field 32) ; and a position of the set of signature strokes 41 on the touchscreen 21 (i.e., the position of the signature field 31) as recorded in the screencast (V) .

In this way, a hash value thus generated is different from others when one of the above parameters is altered. It is noted that in other embodiments, additional parameters (such as the face of the user, a time at which the real-time video 42 is recorded) may be incorporated in generating the hash value.

In some embodiments, in this step, the processor 26 further obtains a time stamp from a time stamp authority (TSA) 1 (see Figure 2), and embeds the time stamp in the original electronic document 3 so as to generate the electronic signed document. This is done as a verification that the electronic signed document is generated at a specific time as indicated by the time stamp.

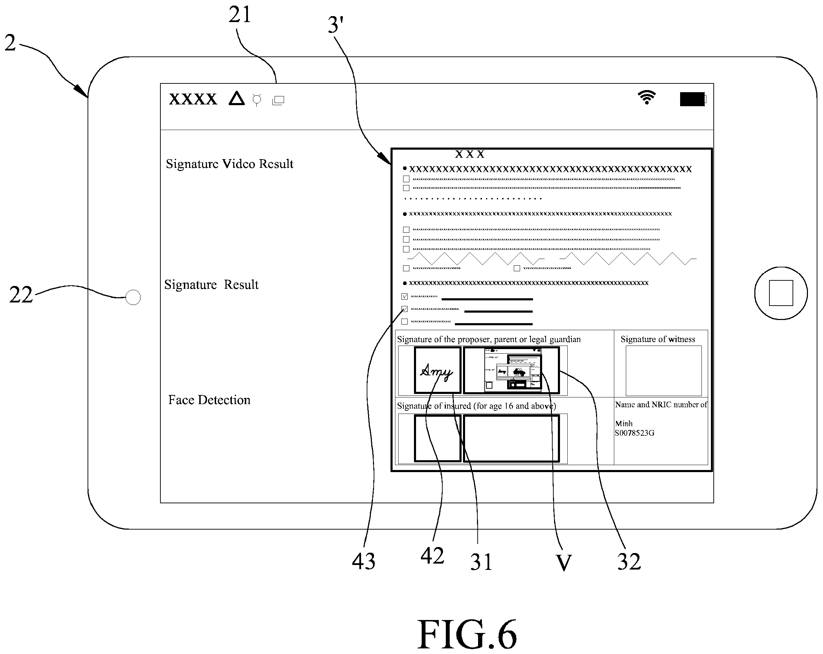

Figure 6 illustrates an electronic signed document 3' that is generated using the above method.

To sum up, embodiments of the disclosure provide a method and an electronic device that is capable of generating an electronic signed document 3' that introduces an association among the user, the original electronic document 3, and the set of signature strokes 41 using the screencast (V) . In this manner, it may be established that the set of signature strokes 41 included the electronic signed document 3' is signed by the user himself/herself.

Additionally, since the screencast (V) includes the set of signature strokes 41, the real-time video 42, the check mark (s) 43, and at least a part of the original electronic document 3, by embedding the screencast (V) instead of the above elements separately, the generation of the electronic signed document 3' may be implemented relatively easily by the electronic device 2 since fewer elements need to be processed.

Moreover, one or more verification measures (e.g., the screencast (V), the encryption value, and the time stamp) maybe selectively incorporated in the electronic signed document 3' in order to verify that the set of signature strokes 41 included the electronic signed document 3' is signed or inputted by the user himself/herself, in order to enhance the authenticity.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure. The invention is specified in the appended claims.

## Claims

1. A method for generating an electronic signed document, the method being implemented using an electronic device (2) that includes a processor (26), an image capturing component (22) and an input/output module that includes a display component, the method including:
displaying, by the display component, an original electronic document;
recording, by the image capturing component (22), a real-time video of a user as the user inputs a set of signature strokes that constitute a signature on the input/output module;
displaying, by the display component, a pop-up window that superimposes a part of the original electronic document, and that includes a signature area for enabling the user to input the set of signature strokes therein, and a video area for displaying the real-time video;
displaying, by the display component, the real-time video as the user inputs the set of signature strokes;
recording a screencast of the display component during a time period in which the user is inputting the set of signature strokes, wherein the screencast includes the real-time video, the set of signature strokes, and at least a part of the original electronic document;
generating the electronic signed document by embedding the signature and the screencast in the original electronic document.

2. The method of Claim 1, wherein :
the original electronic document displayed by the display component includes a signature field; and
displaying the pop-up window is implemented in response to a user-input initiation command associated with the signature field.

3. The method of any one of Claims 1 and 2, wherein after displaying the original electronic document the method further comprises:
activating the image capturing component (22);
determining whether a human face is detected within a field of view of the image capturing component (22); and
allowing the user to input the set of signature strokes when it is determined that the image capturing component (22) has detected a human face.

4. The method of any one of Claims 1 to 3, wherein:
the original electronic document displayed by the display component includes a signature field and a video field; and
generating the electronic signed document includes embedding the signature in the signature field of the original electronic document, and embedding the real-time video in the video field of the original electronic document.

5. The method of any one of Claims 1 to 4, wherein the original electronic document displayed by the display component includes an option field; and
in response to a user-input signal associated with the option field, controlling the display component to display a check mark superimposed on the option field.

6. The method of any one of Claims 1 to 5, wherein generating the electronic signed document further includes generating an encryption value based on at least content of the screencast, and further embedding the encryption value in the original electronic document.

7. The method of Claim 6, wherein the encryption value is generated further based on one or more of the following:
a geolocation of the electronic device;
a position of a check mark superimposed on the original electronic document;
a position of the screencast on the original electronic document; and
a position of the set of signature strokes on the original electronic document.

8. An electronic device (2) for generating an electronic signed document, comprising a processor (26), an image capturing component (22), and an input/output module that includes a display component;
wherein said processor (26) is programmed to:
control said display component to display an original electronic document;
control said image capturing component (22) to record a real-time video of a user as the user inputs a set of signature strokes that constitute a signature on said electronic device (2);
control said display component to display a popup window that superimposes a part of the original electronic document, and that includes a signature area for enabling the user to input the set of signature strokes therein, and a video area for displaying the real-time video;
control said display component to display the real-time video as the user inputs the set of signature strokes;
generate a screencast of said display component during a time period in which the user is inputting the set of signature strokes, wherein the screencast includes the real-time video, the set of signature strokes, and at least a part of the original electronic document;
generate the electronic signed document by embedding the signature and the screencast in the original electronic document.

9. The electronic device of claim 8, wherein the original electronic document displayed by said display component includes a signature field; and
wherein said processor controls said displaying component to display the pop-up window in response to a user-input initiation command associated with the signature field.

10. The electronic device of Claim 9, wherein said processor (26) is further programmed to, after controlling said display component to display the original electronic document;
activate said image capturing component (22); determine whether a human face is detected within a field of view of said image capturing component (22); and
allow the user to input the set of signature strokes when it is determined that said image capturing component (22) has detected a human face.

11. The electronic device of any one of Claims 8 to 10, wherein:
the original electronic document displayed by said display component includes a signature field and a video field; and
in generating the electronic signed document, said processor (26) is programmed to embed the signature in the signature field of the original electronic document, and to embed the real-time video in the video field of the original electronic document.

12. The electronic device of any one of Claims 8 to 11, wherein the original electronic document displayed by said display component includes an option field, said processor (26) is further programmed to:
in response to a user-input signal associated with the option field, control said display component to display a check mark superimposed on the option field.

13. The electronic device of any one of Claims 8 to 12, wherein in generating the electronic signed document, said processor (26) is further programmed to generate an encryption value based on at least content of the screencast, and to embed the encryption value in the original electronic document.

14. The electronic device of Claim 13, wherein the encryption value is generated further based on one or more of the following:
a geolocation of the electronic device (2);
a position of a check mark superimposed on the original electronic document;
a position of the screencast on the original electronic document; and
a position of the set of signature strokes on the original electronic document.

## Patentansprüche

1. Verfahren zum Generieren eines elektronisch unterschriebenen Dokuments, wobei das Verfahren unter Verwendung einer elektronischen Vorrichtung (2) implementiert wird, welche einen Prozessor (26), eine Bilderfassungskomponente (22) und ein eine Anzeigekomponente beinhaltendes Eingabe/Ausgabe-Modul beinhaltet, wobei das Verfahren beinhaltet:
anzeigen eines ursprünglichen elektronischen Dokuments durch die Anzeigekomponente;
aufzeichnen eines Echtzeitvideos eines Benutzers, durch die Bilderfassungskomponente (22), während der Benutzer in dem Eingabe/Ausgabe-Modul einen Satz von Unterschriftsstrichen eingibt, welche eine Unterschrift darstellen;
anzeigen eines Popup-Fensters, welches einen Teil des ursprünglichen elektronischen Dokuments überlagert, und welches einen Unterschriftsbereich, welcher dem Benutzer ermöglicht, den Satz von Unterschriftsstrichen darin einzugeben, und einen Videobereich zum Anzeigen des Echtzeitvideos beinhaltet, durch die Anzeigekomponente;
anzeigen des Echtzeitvideos durch die Anzeigekomponente, während der Benutzer den Satz von Unterschriftsstrichen eingibt;
aufzeichnen eines Screencasts der Anzeigekomponente während einer Zeitspanne, in welcher der Benutzer den Satz von Unterschriftsstrichen eingibt, wobei der Screencast das Echtzeitvideo, den Satz von Unterschriftsstrichen und zumindest einen Teil des ursprünglichen elektronischen Dokuments beinhaltet;
generieren des elektronisch unterschriebenen Dokuments durch Einbetten der Unterschrift und des Screencasts in das ursprüngliche elektronische Dokument.

2. Verfahren nach Anspruch 1, wobei:
das durch die Anzeigekomponente angezeigte ursprüngliche elektronische Dokuments ein Unterschriftfeld beinhaltet; und
Anzeigen des Popup-Fensters als Reaktion auf einen Befehl zum Auslösen einer Benutzereingabe implementiert wird, welche mit dem Unterschriftfeld verknüpft ist.

3. Verfahren nach einem der Ansprüche 1 und 2, wobei nach Anzeigen des ursprünglichen elektronischen Dokuments das Verfahren weiter umfasst:
Aktivieren der Bilderfassungskomponente (22);
Bestimmen, ob ein menschliches Gesicht innerhalb eines Sichtfelds der Bilderfassungskomponente (22) erkannt wurde; und
Erlauben, dass der Benutzer den Satz von Unterschriftsstrichen eingibt, wenn bestimmt wurde, dass die Bilderfassungskomponente (22) ein menschliches Gesicht erkannt hat.

4. Verfahren nach einem der Ansprüche 1 bis 3, wobei:
das durch die Anzeigekomponente angezeigte ursprüngliche elektronische Dokuments ein Unterschriftfeld und ein Videofeld beinhaltet; und
Generieren des elektronisch unterschriebenen Dokuments Einbetten der Unterschrift in das Unterschriftfeld des ursprünglichen elektronischen Dokuments und Einbetten des Echtzeitvideos in das Videofeld des ursprünglichen elektronischen Dokuments beinhaltet.

5. Verfahren nach einem der Ansprüche 1 bis 4, wobei das durch die Anzeigekomponente angezeigte ursprüngliche elektronische Dokument ein Optionsfeld beinhaltet; und
als Reaktion auf ein mit dem Optionsfeld verknüpftes Benutzereingabesignal, Steuern der Anzeigekomponente, um ein Häkchen anzuzeigen, welches das Optionsfeld überlagert.

6. Verfahren nach einem der Ansprüche 1 bis 5, wobei Generieren des elektronisch unterschriebenen Dokuments weiter Generieren eines Verschlüsselungswertes auf Basis zumindest von Inhalten des Screencasts und weiter Einbetten des Verschlüsselungswertes in das ursprüngliche elektronische Dokument beinhaltet.

7. Verfahren nach Anspruch 6, wobei der Verschlüsselungswert weiter auf Basis von einem oder mehreren der folgenden generiert wird:
einer Geolocation der elektronischen Vorrichtung;
einer Position eines Häkchens, welches das ursprüngliche elektronische Dokument überlagert;
einer Position des Screencasts auf dem ursprünglichen elektronischen Dokument; und
einer Position des Satzes von Unterschriftsstrichen auf dem ursprünglichen elektronischen Dokument.

8. Elektronische Vorrichtung (2) zum Generieren eines elektronisch unterschriebenen Dokuments, welche einen Prozessor (26), eine Bilderfassungskomponente (22) und ein eine Anzeigekomponente beinhaltendes Eingabe/Ausgabe-Modul beinhaltet;
wobei der Prozessor (26) programmiert ist zum:
steuern der Anzeigekomponente, um ein ursprüngliches elektronisches Dokument anzuzeigen;
steuern der Bilderfassungskomponente (22), um auf der elektronischen Vorrichtung (2) ein Echtzeitvideo eines Benutzers aufzuzeichnen, während der Benutzer einen Satz von Unterschriftsstrichen eingibt, welche eine Unterschrift darstellen;
steuern der Anzeigekomponente, um ein Popup-Fenster anzuzeigen, welches einen Teil des ursprünglichen elektronischen Dokuments überlagert, und welches einen Unterschriftsbereich, welcher dem Benutzer ermöglicht, den Satz von Unterschriftsstrichen darin einzugeben, und einen Videobereichs zum Anzeigen des Echtzeitvideos beinhaltet;
steuern der Anzeigekomponente, um das Echtzeitvideo anzuzeigen, während der Benutzer den Satz von Unterschriftsstrichen eingibt;
generieren eines Screencasts der Anzeigekomponente während einer Zeitspanne, in welcher der Benutzer den Satz von Unterschriftsstrichen eingibt, wobei der Screencast das Echtzeitvideo, den Satz von Unterschriftsstrichen und zumindest einen Teil des ursprünglichen elektronischen Dokuments beinhaltet;
generieren des elektronisch unterschriebenen Dokuments durch Einbetten der Unterschrift und des Screencasts in das ursprüngliche elektronische Dokument.

9. Elektronische Vorrichtung nach Anspruch 8, wobei das durch die Anzeigekomponente angezeigte ursprüngliche elektronische Dokument ein Unterschriftfeld beinhaltet; und
wobei der Prozessor die Anzeigekomponente steuert, um das Popup-Fenster als Reaktion auf einen Befehl zum Auslösen einer Benutzereingabe anzuzeigen, welche mit dem Unterschriftfeld verknüpft ist.

10. Elektronische Vorrichtung nach Anspruch 9, wobei der Prozessor (26) weiter programmiert ist, um nach Steuern der Anzeigekomponente das ursprüngliche elektronische Dokument anzuzeigen;
die Bilderfassungskomponente (22) zu aktivieren;
zu bestimmen, ob ein menschliches Gesicht innerhalb eines Sichtfelds der Bilderfassungskomponente (22) erkannt wurde; und
zu erlauben, dass der Benutzer den Satz von Unterschriftsstrichen eingibt, wenn bestimmt wurde, dass die Bilderfassungskomponente (22) ein menschliches Gesicht erkannt hat.

11. Elektronische Vorrichtung nach einem der Ansprüche 8 bis 10, wobei:
das durch die Anzeigekomponente angezeigte ursprüngliche elektronische Dokument ein Unterschriftfeld und ein Videofeld beinhaltet; und
durch Generieren des elektronisch unterschriebenen Dokuments der Prozessor (26) programmiert wird, die Unterschrift in das Unterschriftfeld des ursprünglichen elektronischen Dokuments einzubetten und das Echtzeitvideo in das Videofeld des ursprünglichen elektronischen Dokuments einzubetten.

12. Elektronische Vorrichtung nach einem der Ansprüche 8 bis 11, wobei das durch die Anzeigekomponente angezeigte ursprüngliche elektronische Dokument ein Optionsfeld beinhaltet, der Prozessor (26) weiter programmiert ist zum:
als Reaktion auf ein mit dem Optionsfeld verknüpftes Benutzereingabesignal, Steuern der Anzeigekomponente, um ein Häkchen anzuzeigen, welches das Optionsfeld überlagert.

13. Elektronische Vorrichtung nach einem der Ansprüche 8 bis 12, wobei durch Generieren des elektronisch unterschriebenen Dokuments der Prozessor (26) weiter programmiert ist, um einen Verschlüsselungswert auf Basis zumindest von Inhalten des Screencasts zu generieren, und weiter den Verschlüsselungswert in das ursprüngliche elektronische Dokument einzubetten.

14. Elektronische Vorrichtung nach Anspruch 13, wobei der Verschlüsselungswert weiter auf Basis von einem oder mehreren der folgenden generiert wird:
einer Geolocation der elektronischen Vorrichtung (2) ;
einer Position eines Häkchens, welches das ursprüngliche elektronische Dokument überlagert;
einer Position des Screencasts auf dem ursprünglichen elektronischen Dokument; und
einer Position des Satzes von Unterschriftsstrichen auf dem ursprünglichen elektronischen Dokument.

## Revendications

1. Méthode de génération d'un document électronique signé, la méthode étant mise en œuvre à l'aide d'un dispositif électronique (2) qui comporte un processeur (26), un composant de capture d'image (22) et un module d'entrée/sortie qui comporte un composant d'affichage, la méthode comportant :
l'affichage, par le composant d'affichage, d'un document électronique original ;
l'enregistrement, par le composant de capture d'image (22), d'une vidéo en temps réel d'un utilisateur lorsque l'utilisateur entre un ensemble de traits de signature qui constituent une signature sur le module d'entrée/sortie ;
l'affichage, par le composant d'affichage, d'une fenêtre surgissante qui superpose une partie du document électronique original, et qui comporte une zone de signature pour permettre à l'utilisateur d'y entrer l'ensemble de traits de signature, et une zone vidéo pour afficher la vidéo en temps réel ;
l'affichage, par le composant d'affichage, de la vidéo en temps réel lorsque l'utilisateur entre l'ensemble de traits de signature ;
l'enregistrement d'une vidéo capture d'écran du composant d'affichage pendant une période de temps au cours de laquelle l'utilisateur entre l'ensemble de traits de signature, dans laquelle la vidéo capture d'écran comporte la vidéo en temps réel, l'ensemble de traits de signature et au moins une partie du document électronique original ;
la génération du document électronique signé en incorporant la signature et la vidéo capture d'écran dans le document électronique original.

2. Méthode selon la revendication 1, dans laquelle le document électronique original affiché par le composant d'affichage comporte un champ de signature ; et
l'affichage de la fenêtre surgissante est mis en œuvre en réponse à une instruction d'initiation d'entrée utilisateur associée au champ de signature.

3. Méthode selon l'une quelconque des revendications 1 et 2, dans laquelle, après affichage du document électronique original, la méthode comprend en outre :
l'activation du composant de capture d'image (22) ;
la détermination si un visage humain est détecté dans un champ de vision du composant de capture d'image (22) ; et
la permission à l'utilisateur d'entrer l'ensemble de traits de signature lorsqu'il est déterminé que le composant de capture d'image (22) a détecté un visage humain.

4. Méthode selon l'une quelconque des revendications 1 à 3, dans laquelle
le document électronique original affiché par le composant d'affichage comporte un champ de signature et un champ de vidéo ; et
la génération du document électronique signé comporte l'incorporation de la signature dans le champ de signature du document électronique original, et l'intégration de la vidéo en temps réel dans le champ de vidéo du document électronique original.

5. Méthode selon l'une quelconque des revendications 1 à 4, dans laquelle le document électronique original affiché par le composant d'affichage comporte un champ option ; et
en réponse à un signal d'entrée utilisateur associé au champ option, la commande du composant d'affichage pour afficher une coche superposée sur le champ option.

6. Méthode selon l'une quelconque des revendications 1 à 5, dans laquelle la génération du document électronique signé comporte en outre la génération d'une valeur de cryptage sur la base d'au moins un contenu de la vidéo capture d'écran, et l'incorporation en outre de la valeur de cryptage dans le document électronique original.

7. Méthode selon la revendication 6, dans laquelle la valeur de cryptage est en outre générée sur la base d'un ou plusieurs parmi les suivants :
une géolocalisation du dispositif électronique ;
une position d'une coche superposée sur le document électronique original ;
une position de la vidéo capture d'écran sur le document électronique original ; et
une position de l'ensemble de traits de signature sur le document électronique original.

8. Dispositif électronique (2) pour générer un document électronique signé, comprenant un processeur (26), un composant de capture d'image (22), et un module d'entrée/sortie qui comporte un composant d'affichage ;
dans lequel ledit processeur (26) est programmé pour :
commander ledit composant d'affichage pour afficher un document électronique original ;
commander ledit composant de capture d'image (22) pour enregistrer une vidéo en temps réel d'un utilisateur lorsque l'utilisateur entre un ensemble de traits de signature qui constituent une signature sur ledit dispositif électronique (2) ;
commander ledit composant d'affichage pour afficher une fenêtre surgissante qui superpose une partie du document électronique original, et qui comporte une zone de signature pour permettre à l'utilisateur d'y entrer l'ensemble de traits de signature, et une zone vidéo pour afficher la vidéo en temps réel ;
commander ledit composant d'affichage pour afficher la vidéo en temps réel lorsque l'utilisateur entre l'ensemble de traits de signature ;
générer une vidéo capture d'écran dudit composant d'affichage pendant une période de temps au cours de laquelle l'utilisateur entre l'ensemble de traits de signature, dans lequel la vidéo capture d'écran comporte la vidéo en temps réel, l'ensemble de traits de signature et au moins une partie du document électronique original ;
générer le document électronique signé en incorporant la signature et la vidéo capture d'écran dans le document électronique original.

9. Dispositif électronique selon la revendication 8, dans lequel le document électronique original affiché par ledit composant d'affichage comporte un champ de signature ; et
dans lequel ledit processeur commande ledit composant d'affichage pour afficher la fenêtre surgissante en réponse à une instruction d'initiation d'entrée utilisateur associée au champ de signature.

10. Dispositif électronique selon la revendication 9, dans lequel ledit processeur (26) est en outre programmé pour afficher, après avoir commandé ledit composant d'affichage, le document électronique original ;
activer ledit composant de capture d'image (22) ;
déterminer si un visage humain est détecté dans un champ de vision dudit composant de capture d'image (22) ; et
permettre à l'utilisateur d'entrer l'ensemble de traits de signature lorsqu'il est déterminé que ledit composant de capture d'image (22) a détecté un visage humain.

11. Dispositif électronique selon l'une quelconque des revendications 8 à 10, dans lequel :
le document électronique original affiché par ledit composant d'affichage comporte un champ de signature et un champ de vidéo ; et
lors de la génération du document électronique signé, ledit processeur (26) est programmé pour intégrer la signature dans le champ de signature du document électronique original, et pour intégrer la vidéo en temps réel dans le champ de vidéo du document électronique original.

12. Dispositif électronique selon l'une quelconque des revendications 8 à 11, dans lequel le document électronique original affiché par ledit composant d'affichage comporte un champ option, ledit processeur (26) est en outre programmé pour :
en réponse à un signal d'entrée utilisateur associé au champ option, commander ledit composant d'affichage pour afficher une coche superposée sur le champ option.

13. Dispositif électronique selon l'une quelconque des revendications 8 à 12, dans lequel lors de la génération du document électronique signé, ledit processeur (26) est en outre programmé pour générer une valeur de cryptage sur la base d'au moins un contenu de la vidéo capture d'écran, et pour intégrer la valeur de cryptage dans le document électronique original.

14. Dispositif électronique selon la revendication 13, dans lequel la valeur de cryptage est en outre générée sur la base d'un ou plusieurs des suivants :
une géolocalisation du dispositif électronique (2) ;
une position d'une coche superposée sur le document électronique original ;
une position de la vidéo capture d'écran sur le document électronique original ; et
une position de l'ensemble de traits de signature sur le document électronique original.
